# EUROPEAN PATENT APPLICATION

(11) **EP 3 179 606 A1**
(43) Date of publication of application: **14.06.2017**
(21) Application number: 15198418.4
(22) Date of filing: 08.12.2015
(51) Int. Cl.: H02K 1/27

(54) **A ROTOR FOR AN ELECTRIC MACHINE**

(71) Applicant: ABB Schweiz AG, 5400 Baden (CH)
(72) Inventor: Keitamo, Jori-Pekka, 00380 Helsinki (FI); Mäkinen, Antti, 00380 Helsinki (FI); Raute, Rami, 00980 Helsinki (FI)
(74) Representative: Kolster Oy Ab

(57) **Abstract**

The rotor (20) has an axial direction (X-X) and a transverse direction (Y-Y). The rotor comprises an outer surface (22A) with an axial length and provided with a plurality of primary rows (A1, A2) of permanent magnet modules (200) distributed along a perimeter of the outer surface of the rotor, each primary row (A1, A2) comprising at least one permanent magnet module. Each permanent magnet module comprises a cover (100) having a top part (110) forming at least one compartment (130) for housing at least one permanent magnet (35). The top part of the cover is provided with at least one cut (150) extending substantially in a transverse direction in relation to a direction of the row along at least a portion of the width (W1) in the traverse direction of the top part of the cover and cutting through the whole thickness of the top part of the cover.

## Description

### FIELD OF THE INVENTION

The present invention relates to a rotor for an electric machine.

### BACKGROUND ART

US patent application 2008/0238234 discloses a segmented permanent magnet rotor for high-speed synchronous machines. Eddy current losses are reduced by axially segmenting the containment sleeve and the permanent magnets. The axial segmentation of the containment sleeve includes forming grooves circumferentially around the outer surface of the containment sleeve. The circumferential grooves disrupt eddy current generation on the outer surface of the containment sleeve and therefore reduce eddy current losses in the containment sleeve. Axial segmentation of the permanent magnets also disrupts eddy current formation, thereby reducing eddy current losses in the permanent magnets. In addition, the presence of an electrically insulated layer between the containment sleeve and the permanent magnets reduces eddy current migration from the containment sleeve to the permanent magnets, and therefore provides additional reduction of eddy current losses.

US patent 7,791,237 discloses a fault tolerant synchronous permanent magnet machine. The rotor losses are reduced by limiting eddy currents losses in the retaining sleeve. Eddy current losses are limited by any one or by a combination of axially segmenting the retaining sleeve, providing a highly electrically conductive non-magnetic shield to the retaining sleeve, and by configuring stator teeth width, stator teeth tip width, and slot distribution of the stator.

US patent 8,084,910 discloses a rotor for a permanent-magnet synchronous machine. A pole structure is fitted on the rotor body structure facing the air gap. Each of the rotor's pole structures comprises at least one permanent magnet and a shell structure fitted on top of it. According to the invention, an intermediate layer made of magnetic composite is fitted between the permanent magnet and the shell.

US patent 7,030,530 discloses a permanent magnet element for an electric machine. The permanent magnet element comprises at least one permanent magnet piece and a protective cover that is arranged to partly surround the permanent magnet pieces arranged in the element. The permanent magnet element further comprises one of more fastening elements.

EP patent application 1 990 811 discloses a method for manufacturing a permanent magnet. The permanent magnet pole piece comprises at least one magnet which is fixed to a base plate, a protective cover and a filling mass. The method comprises the steps of fixing the protective layer to the base plate so that it covers the magnet and so that the protective cover and the base plate are hermetically sealed jointed, evacuating the interior cavity between the protective cover and the base plate through an opening, injecting the filling mass through an opening into the interior cavity between the protective cover and the base plate, and curing the filling mass.

### BRIEF DESCRIPTION OF THE INVENTION

An object of the present invention is an improved rotor for an electric machine.

The rotor for the electric machine according to the invention is characterized by what is stated in the independent claim 1.

The rotor for the electric machine,
the rotor having an axial direction and a transverse direction being perpendicular to the axial direction,
the rotor comprising an outer surface with an axial length, the outer surface of the rotor being provided with a plurality of primary rows of surface mounted permanent magnet modules distributed along a perimeter of the outer surface of the rotor, each primary row comprising at least one permanent magnet module,
the permanent magnet module comprising a cover having a top part forming at least one compartment for housing at least one permanent magnet,

The rotor for the electric machine is characterized in that:
the top part of the cover is provided with at least one cut extending substantially in a transverse direction in relation to a direction of the row along at least a portion of a width in the transverse direction of the top part of the cover and cutting through the whole thickness of the top part of the cover.

The at least one cut in the top part of the cover will truncate the top part into portions. Eddy currents will thus be formed only in the portions of the top part. This means that eddy currents extending over the whole axial length of the top part are eliminated.

The at least one cut in the cover must extend through the whole thickness of the top part of the cover in order to eliminate eddy currents. Eddy currents produced in a rotor for an electric machine being connected to the electric grid through a frequency converter may creep under the grooves if the grooves would extend only to a portion of the thickness of the top part of the cover. The connection frequency of a frequency converter varies, whereby also the penetration depth of the eddy currents in the top part of the cover varies.

### BRIEF DESCRIPTION OF THE DRAWINGS

In the following the invention will be described in greater detail by means of preferred embodiments with reference to the attached drawings, in which
Figure 1 shows an axial cross section of an electric machine.
Figure 2 shows a radial cross section of a portion of the electric machine according to figure 1.
Figure 3 shows a permanent magnet module for a rotor,
Figure 4 shows a first embodiment of a permanent magnet module for a rotor according to the invention,
Figure 5 shows a second embodiment of a permanent magnet module for a rotor according to the invention,
Figure 6 shows a third embodiment of a permanent magnet module for a rotor according to the invention,
Figure 7 shows a fourth embodiment of a permanent magnet module for a rotor according to the invention.

### DETAILED DESCRIPTION OF THE INVENTION

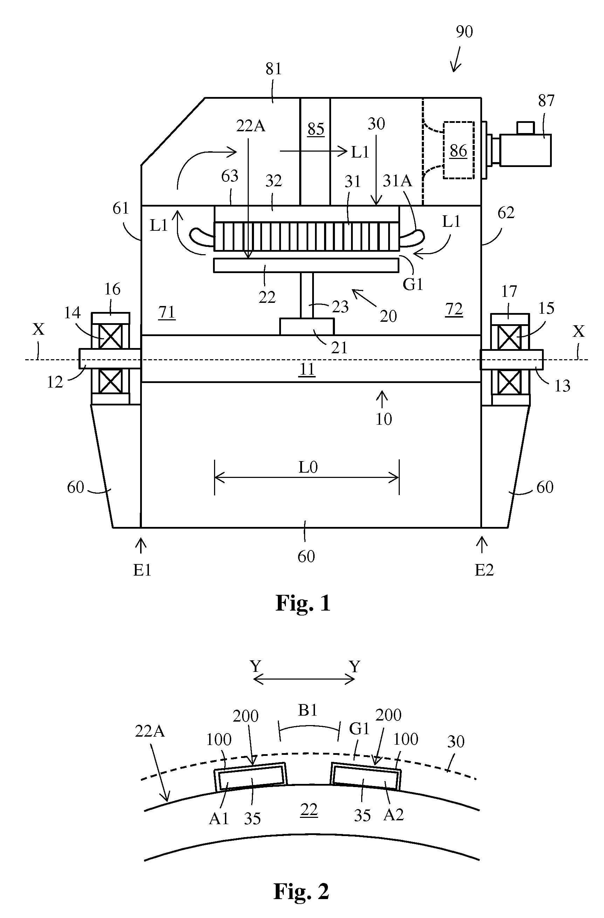

Figure 1 shows an axial cross section of an electric machine. The electric machine comprises a shaft 10, a rotor 20, a stator 30, and a frame construction 60. Only the upper portion of the rotor 10 and the stator 20 is shown in the figure.

The shaft 10 comprises a middle portion 11 and two opposite end portions 12, 13. The shaft 10 is rotatably supported with bearings 14, 15 positioned in respective bearing housings 16, 17 at the frame construction 60 of the electric machine 90. The bearings 14, 15 are positioned at respective end portions 12, 13 of the shaft 10. The outer perimeter of the cross section of the rotor 20 is circular in this embodiment. The outer perimeter of the cross section of the rotor 20 could, however, be e.g. polygonal instead of circular.

The rotor 20 is attached to the middle portion 11 of the shaft 10 so that the rotor 20 rotates with the shaft 10. The rotor 20 comprises a core being formed of an inner cylinder 21 coaxial with the shaft 10, an outer cylinder 22 coaxial with the shaft 10 and positioned at a radial distance from the inner cylinder 21, and a traverse support flange 23 supporting the outer cylinder 22 at the inner cylinder 21. The inner cylinder 21 is attached to the middle portion 11 of the shaft 10. The rotor 20 comprises further an outer surface 22A having an axial length L0. The outer surface 22A is in this embodiment formed by the outer surface 22A of the outer cylinder 22.

The stator 30 surrounds the rotor 20 and is attached to the frame construction 60 of the electric machine 90. The stator 30 comprises a cylindrical stator core 31 surrounding the rotor 20 and a stator frame 32. The stator core 31 comprises a stator winding of which only the end portions 31A are shown. The end portions 31A of the stator winding protrude out from the stator core 31 at both axial X-X ends of the stator core 31. The stator frame 32 surrounds the stator core 31 and the stator core 31 is firmly attached to the stator frame 32. The stator frame 32 forms part of the frame construction 60 of the electric machine 90.

An air gap G1 is formed between the rotor 20 and the stator 30.

The frame construction 60 of the electric machine 90 comprises a first end portion 61 positioned at a first end E1 of the electric machine 90 at an axial X-X distance from first axial X-X ends of the rotor 20 and the stator 30. The frame construction 60 of the electric machine 90 comprises a second opposite end portion 62 positioned at a second end E2 of the electric machine 90 at an axial X-X distance from opposite second axial X-X ends of the rotor 20 and the stator 30. The frame construction 60 of the electric machine 90 comprises further a circumference portion 63 surrounding the stator 30.

A first end compartment 71 is formed between the first axial X-X ends of the stator 30 and the rotor 20 and the first end portion 61 of the frame construction 60 of the electric machine 90. A second end compartment 72 being opposite to the first end compartment 71 is formed between the second axial X-X ends of the stator 30 and the rotor 20 and the second end portion 62 of the frame construction 60 of the electric machine 90.

There is further an outer compartment 81 on top of the electric power generator 90. The outer compartment 81 is provided with a heat exchanger 85 and a fan 86. The fan 86 is driven by an electric motor 87 being positioned outside the outer compartment 81. Cooling air L1 is circulated with the fan 86 from the outer compartment 81 into the second end compartment 72 and further in the axial X-X direction through the rotor 10 and stator 20 to the first end compartment 71. The cooling air L1 is further directed from the first end compartment 71 into the outer compartment 81 and further through the heat exchanger 85 to the fan 86 in the outer compartment 81. The heat exchanger 85 can be an air-to-air or an air-to-water heat exchanger. There are perforations in the circumference portion 63 of the frame construction 60 between the first end compartment 71 and the outer compartment 81 and between the second end compartment 72 and the outer compartment 81. A first axial X-X cooling air channel A1 is provided by the air gap G1 between the rotor 10 and the stator 20.

Figure 2 shows a radial cross section of a portion of the electric machine according to figure 1. Surface mounted permanent magnet modules 200 are positioned on the outer surface 22A of the outer cylinder 22 of the rotor 20 i.e. on the outer rotor surface 22A. The permanent magnet modules 200 are arranged in a plurality of rows A1, A2 distributed along a perimeter of the outer surface 22A of the rotor 20. The rows A1, A2 of permanent magnet modules 200 may be directed in an axial direction X-X on the outer surface 22A of the rotor 20. The rows A1, A2 may further be positioned at a circumferential distance B1 from each other. Each row A1, A2 comprises at least one permanent magnet module 200 extending along at least a portion of the axial length L0 of the rotor outer surface 22A. There may be a plurality of consecutive permanent magnet modules 200 in each row A1, A2 on the outer rotor surface 22A. The consecutive permanent magnet modules 200 are in such case positioned one after the other along the axial X-X length L0 of the outer rotor surface 22A. There may be a small axial distance between the consecutive permanent magnet modules 200. The other possibility is to arrange the opposing ends of the consecutive permanent magnet modules 200 as close to each other as possible. Each permanent magnet module 200 in each axial X-X row of permanent magnet modules 200 comprises at least one permanent magnet 35 encapsulated in a cover 100. The rotor 20 has an axial direction X-X and a transverse direction Y-Y being perpendicular to the axial direction X-X.

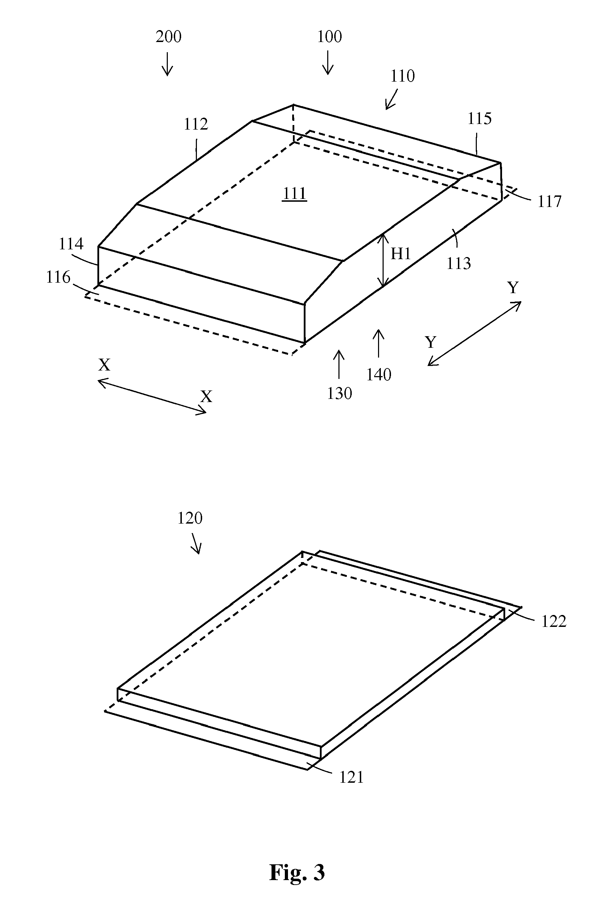

Figure 3 shows a permanent magnet module for a rotor. The permanent magnet module 200 comprises a cover 100 and at least one permanent magnet 35 being positioned within the cover 100. The permanent magnets 35 are not shown in the figure for clarity reasons. The cover 100 comprises a top part 110 forming a compartment 130 with a bottom 140. The top part 110 comprises a top wall 111 and four side walls 112, 113, 114, 115. The upper edges of the four side walls 112, 113, 114, 115 coincide with the side edges of the top wall 111. The first side wall 112 and the second side wall 113 positioned opposite to the first side wall 112 are parallel. The third side wall 114 and the fourth side wall 115 positioned opposite to the third side wall 114 are also parallel. The top part 110 may further be provided with extension portions 116, 117 extending outwardly in the circumferential direction from the third side wall 114 and the fourth side wall 115. These extension portions 116, 117 form flanges by means of which the permanent magnet module 200 can be attached to the rotor 20. The first side wall 112 and the second side wall 113 extend in a transverse direction Y-Y i.e. in a direction perpendicular to the axial direction X-X and the third side wall 114 and the fourth side wall 115 extend in the axial direction X-X when the rows A1, A2 of permanent magnet modules 200 extend in the axial direction X-X.

The cover 100 may further comprise a bottom plate 120 being positioned against the bottom 140 of the compartment 130 in order to close the open bottom 140 of the compartment 130. The top wall 111 and the side walls 112, 113, 114, 115 are advantageously formed as one entity and the bottom plate 120 is advantageously formed as a separate entity. The bottom plate 120 may be attached to the lower edges of the four side walls 112, 113, 114, 115 so that a compartment 130 is formed within the permanent magnet module 200. The bottom plate 120 may be provided with extension portions 121, 122 extending outwards in the circumferential direction from the transverse ends of the bottom plate 120. These extension portions 121, 122 form flanges by means of which the permanent magnet module 200 can be attached to the rotor 20. The upper surface of the bottom plate 120 may be planar and the lower surface of the bottom plate 120 may be planar or curved. The curvature of the lower surface of the bottom plate 120 may correspond to the curvature of the outer surface 22A of the rotor 20. A planar lower surface of the bottom plate 120 may be used when the outer surface 22A of the rotor 20 is polygonal i.e. there are straight rotor portions under each row A1, A2 of permanent magnet modules 200. A curved lower surface may be used when the outer surface 22A of the rotor 20 is circular i.e. there are curved rotor portions under each row A1, A2 of permanent magnet modules 200. The general form of the bottom plate 120 may be adapted to the general form of the top part 110 of the cover 100.

The flanges 116, 117 of the top part 110 and/or the flanges 121, 122 of the bottom plate 120 may be used to fasten the permanent magnet module 200 to the rotor 20. The permanent magnet modules 200 are thus surface mounted on the rotor 20. The permanent magnets modules 200 can be fastened e.g. with screws passing through openings in the flanges 116, 117, 121, 122 to the rotor 20. Another possibility would be to use a stiffening bar passing in the axial direction X-X on each flange 116, 117, 121, 122, whereby the screws would pass through the stiffening bar and the flanges 121, 122 to the rotor 20. Still another possibility would be to use glue to fasten the permanent magnet modules 200 to the rotor 20. Only the top part 110 could be provided with flanges 116, 117 or only the bottom plate 120 could be provided with flanges 121, 122 or both the top part 110 and the bottom plate 120 could be provided with flanges 116, 117, 121, 122. Still another possibility would be that the permanent magnet module 200 would not at all be provided with flanges 116, 117, 121, 122 in which case the permanent magnet module 200 could be attached to the rotor 20 by some other means. There could e.g. be wedge shaped support pieces engaging with the side walls 114, 115 of the top part 110 so that the permanent magnet module 200 would be pressed between the axially X-X extending wedge shaped support pieces.

The compartment 130 within the cover 100 has a height H1 in the radial direction and comprises at least one permanent magnet 35 enclosed within the compartment 130. The height H1 of the compartment 130 in the radial direction may vary along a transverse direction to the direction of the row A1, A2 when a curved top wall 111 is used, but the height H1 of the compartment 130 is uniform along a line in the direction of the row A1, A2. There may in addition to the permanent magnets 35 also be other intermediate parts which are used to form a tight fit of the permanent magnets 35 into the compartment 130. In case the bottom plate 120 is used, the permanent magnets 35 will be hermetically sealed within the cover 100. There is in such case no need to coat the permanent magnets 35 e.g. with epoxy. In case the bottom plate 120 is not used, the permanent magnets 35 could be coated e.g. with epoxy. The permanent magnet modules 200 are manufactured so that the permanent magnets 35 are attached with glue into the compartment 130 in the top part 110 of the cover 100. In case a bottom plate 120 is used, the bottom plate 120 may then be attached with glue to the permanent magnets 35 and to the lower edges of the side walls 112, 113, 114, 115 in the top part 110 of the cover 100. The bottom plate 120 may be attached stationary or detachably to the top part 110 of the cover 100. The whole package forming the permanent magnet module 200 may then be magnetized. The magnetized permanent magnet module 200 can then be sent from the magnet manufacturer to the rotor manufacturer where the magnetized magnet modules 200 are attached to the rotor 20. The permanent magnet modules 200 may thus be assembled and magnetized by a subcontractor separately and at a different time in relation to the manufacture of the rotor 20. The permanent magnet module 200 will thus form a rigid package and the permanent magnets 35 will be enclosed within the cover 100.

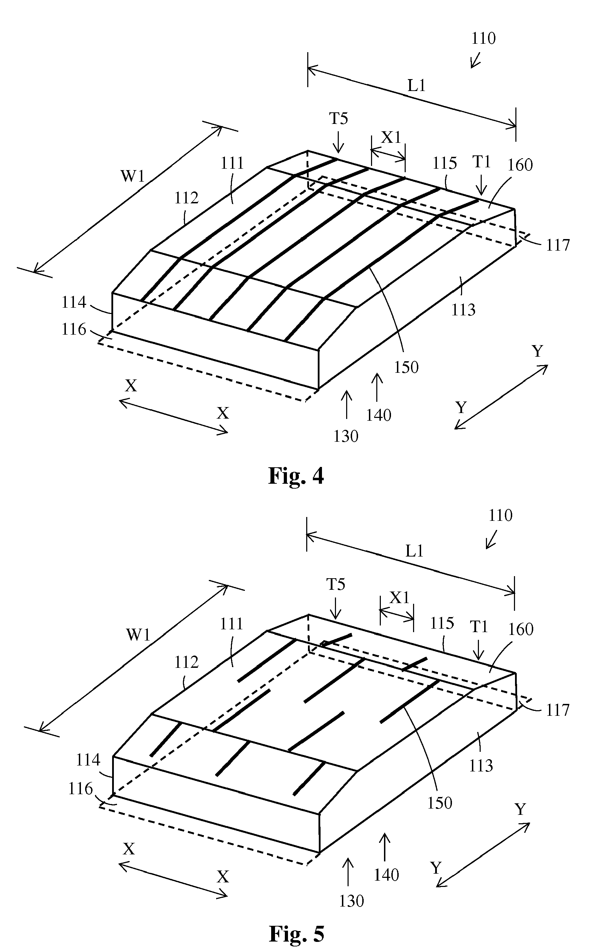

Figure 4 shows a first embodiment of a permanent magnet module for a rotor according to the invention. The figure shows only the top part 110 of the cover 100. The bottom 140 of the compartment 130 formed by the top part 110 is open. The bottom plate 120 shown in figure 3 can be used to close the open bottom 140 of the permanent magnet module 200. The top part 110 of the cover 100 corresponds as such to the top part 110 of the cover 100 shown in figure 3 except for the structure of the top wall 111. The top part 110 of the cover 100 has a length L1 in the axial direction X-X and a width W1 in a transverse direction Y-Y i.e. in a direction perpendicular to the axial direction X-X. The top wall 111 of the top part 110 of the cover 100 is provided with a pattern of cuts 150. The cuts 150 extend through the whole thickness of the top wall 111 of the top part 110 of the cover 100. The cuts 150 may be formed in substantially transverse directed Y-Y secondary rows T1-T5 positioned at an axial X-X distance X1 form each other. Each secondary row T1-T5 may be provided with at least one cut 150 extending at least along a portion of the transverse width W1 of the cover 100. The cuts 150 truncate the top wall 111 of the top part 110 of the cover 100 into portions so that straight axial X-X current paths between axial X-X ends of the top wall 111 of the top part 110 of the cover 100 are eliminated. The figure shows five secondary rows of cuts 150, but there could be any suitable number of cuts 150 in the top wall 111 of the top part 110 of the cover 100. There is only one cut 150 in each secondary row T1-T5 in the figure. The cut 150 in each secondary row T1-T5 extends substantially in the transverse direction Y-Y along the whole width W1 of the top wall 111 of the top part 110 of the cover 100. The secondary rows of cuts 150 are advantageously parallel and situated at an equal axial X-X distance X1 from each other on the top wall 111 of the top part 110 of the cover 100. The axial X-X distance X1 between the secondary rows T1-T5 could vary. The side walls 112, 113, 114, 115 of the top part 110 of the cover 100 remain solid so that the top part 110 of the cover 100 with the cuts 150 still forms one single entity. The rows of cuts 150 form barriers for eddy currents generated in the top wall 111 of the top part 110 of the cover 100. The generation of eddy currents will be restricted to each portion of the top wall 111 due to the cuts 150. Eddy currents cannot pass over the cuts 150 in the top wall 111 of the top part 110 of the cover 100. This pattern of cuts 150 eliminates eddy currents in the top wall 111 of the top part 110 of the cover 100 effectively. The mechanical strength of the top part 110 of the cover 100 is naturally reduced when this pattern of cuts 150 is used as the cuts 150 extend over the whole transverse width W1 of the top part 110 of the cover 100.

Figure 5 shows a second embodiment of a cover for a permanent magnet module in a rotor according to the invention. The figure shows only the top part 110 of the cover 100. The bottom 140 of the compartment 130 formed by the top part 110 is open. The bottom plate 120 shown in figure 3 can be used to close the open bottom 140 of the permanent magnet module 200. The top part 110 of the cover 100 corresponds as such to the top part 110 of the cover 100 shown in figure 3 except for the structure of the top wall 111. This embodiment differs from the embodiment shown in figure 4 due to the fact that the cuts 150 in each secondary row T1-T5 do not extend along the whole width W1 of the top part 110 of the cover 100. The secondary rows T1-T5 of cuts 150 are still advantageously parallel and situated at an equal axial X-X distance X1 from each other. There are several consecutive cuts 150 in each secondary row T1-T5. Solid neck portions are thus formed in the top wall 111 between the ends of the cuts 150. The cuts 150 in two adjacent secondary rows T1-T5 are staggered so that there is a cut 150 in at least one of the two adjacent secondary rows T1-T5 that extends in the transverse direction Y-Y over the solid neck portion of the top wall 111 of the top part 110 of the cover 100 that is left between two consecutive cuts 150 in the other of the two adjacent secondary rows T1-T5. There is no overlap between cuts 150 in two adjacent secondary rows T1-T5. The cuts 150 truncate the top wall 111 of the top part 110 of the cover 100 in the axial X-X direction into several portions. There are no straight axial X-X current paths between the axial X-X ends of the top wall 111 of the top part 110 of the cover 100. The ends of the cuts 150 in two adjacent rows are positioned on the same straight axial X-X line. This means that the cuts 150 in two adjacent rows are not overlapping in this embodiment. This embodiment of the invention eliminates eddy currents in the top wall 111 of the top part 110 of the cover 100 less effectively compared to the embodiment of the invention in figure 4. The mechanical strength of the top part 110 of the cover 100 is on the other hand reduced less in this embodiment of the invention compared to the embodiment of the invention in figure 4.

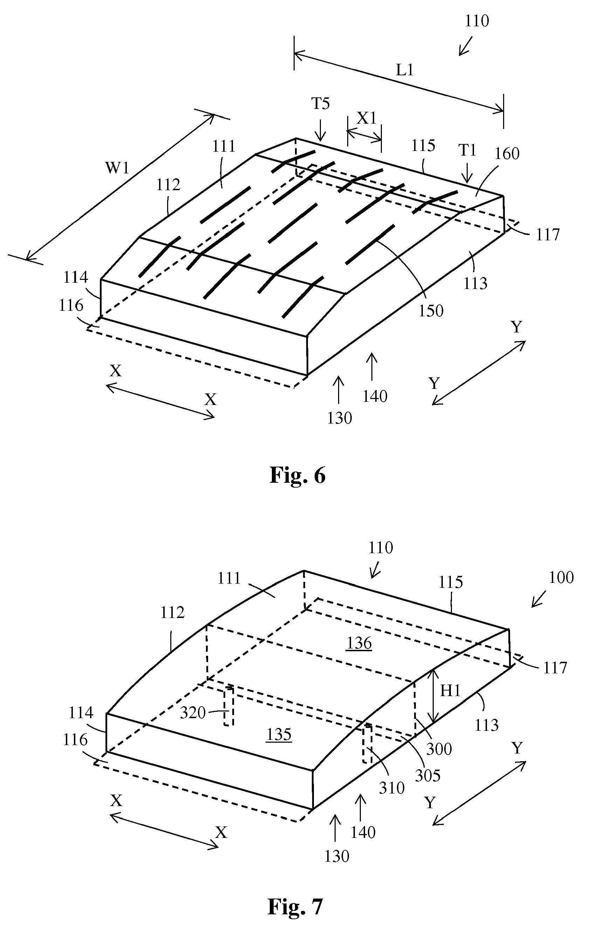

Figure 6 shows a third embodiment of a permanent magnet module for a rotor according to the invention. The figure shows only the top part 110 of the cover 100. The bottom 140 of the compartment 130 formed by the top part 110 is open. The bottom plate 120 shown in figure 3 can be used to close the open bottom 140 of the permanent magnet module 200. The top part 110 of the cover 100 corresponds as such to the top part 110 of the cover 100 shown in figure 3 except for the structure of the top surface 111. This embodiment differs from the embodiment shown in figure 5 due to the fact that the cuts 150 in two adjacent rows are partly overlapping. There are several consecutive cuts 150 in each secondary row T1-T5. The cuts 150 in two adjacent secondary rows T1-T5 are staggered so that each cut 150 in at least one of the two adjacent secondary rows T1-T5 extends in the transverse direction Y-Y a distance over the solid neck portion of the top wall 111 that is left between two consecutive cuts 150 in the other of the two adjacent secondary rows T1-T5. There is thus a partial overlap between cuts 150 in two adjacent secondary rows T1-T5. There are no straight axial X-X current paths between the axial X-X ends of the top wall 111 of the top part 110 of the cover 100. This embodiment of the invention eliminates eddy currents in the top wall 111 of the top part 110 of the cover 100 more effectively compared to the embodiment of the invention in figure 5. The mechanical strength of the top part 110 of the cover 100 is on the other hand reduced in this embodiment of the invention compared to the embodiment of the invention in figure 5.

Figure 7 shows a fourth embodiment of a permanent magnet module for a rotor according to the invention. The figure shows only the top part 110 of the cover 100. The bottom 140 of the compartment 130 formed by the top part 110 is open. The bottom plate 120 shown in figure 3 can be used to close the open bottom 140 of the permanent magnet module 200. The top part 110 of the cover 100 in this embodiment differs from the top parts 110 of the covers 100 in the other embodiments due to the fact that the compartment 130 within the top part 110 of the cover 100 is divided into two sub-compartments 135, 136 with an intermediate wall 300 extending in the axial direction X-X. The intermediate wall 300 extends in the axial direction X-X between the first side wall 112 and the second side wall 113 of the top part 110. The height H1 of the intermediate wall 300 may correspond to the height H1 of the top part 110 of the cover 100 at the position where the intermediate wall 300 is positioned. The intermediate wall 300 may form an integral part of the top part 110 or the intermediate wall 300 may be formed of a separate part that is fixedly attached to the top wall 111 and the side walls 112, 113, 113, 114 in the top part 110.

The intermediate wall 300 may comprise a flange portion 305 at the lower edge of the intermediate wall 300. The flange portion 305 is perpendicular to the intermediate wall 150. The flange portion 305 comprises fastening means 310, 320 e.g. bolts being attached to the flange portion 305 and extending through the flange portion 305 outwardly into the rotor 20. The bolts 310, 320 may be fixedly attached to an upper surface of the flange portion 305 of the intermediate wall 300. The bolts 310, 320 may extend through the flange portion 305 into holes passing through the rotor 20, whereby nuts may be threaded on the ends of the bolts 310, 320 from the inside of the rotor 20. The intermediate wall 300 may thus be firmly attached to the rotor 20 via the bolts 310, 320 and the nuts. The bottom plate 120 may in this case be provided with through holes so that the first fastening means 310, 320 can pass through these holes into the holes in the rotor 20 in case the top part 110 is closed with the bottom part 120. The cover 100 could, however, be used without the bottom plate 120 in which case the bottom 140 of the top part 110 of the cover 100 would be open.

Each sub-compartment 135, 136 comprises at least one permanent magnet 35 enclosed within the sub-compartment 135, 136. There may be several intermediate walls 300 dividing the compartment 130 into several sub-compartments. The flange portion 305 of the intermediate wall 300 could be formed by a folded portion of the intermediate wall 300. The intermediate wall 300 could extend below the bottom surface of the top part 110 of the cover 100, whereby also the flange portion 305 would be positioned below the bottom surface of the top part 110 of the cover 100. This would mean that a groove would be needed in the outer surface 22A of the rotor 20, whereby said groove would receive the outwardly protruding lower portion of the intermediate wall 300 with the flange portion 305. The end of the bolt attached to the upper surface of the flange portion 305 would thus be positioned below the bottom surface of the top part 110 in the groove so that the whole interior space of both sub-compartments 135, 136 would be free for the permanent magnets 35. The bolts 310, 320 could also be directed the other way from the interior of the rotor 20 through the hole in the rotor 20 to a threaded hole in a support bar being attached to the flange portion 305. The support bar could be attached to an upper or to a lower surface of the flange portion 305. Holes would be needed in the flange portion 305 if the support bar would be attached to the upper surface of the flange portion 305 so that the bolts could pass through the holes in the flange portion 305 to the threaded holes in the support bar. The support bar would be positioned on the groove. The lower edge of the intermediate wall 300 could as an alternative be provided with a wedge shaped protrusion extending into a wedge shaped groove in the rotor 20. The permanent magnet modules would then be pushed in the axial direction on the rotor 20 so that the wedge shaped protrusion would glide into the wedge shaped groove. The bottom plate 120 could comprise two separate parts, whereby a first part would close a first sub-compartment 135 and a second part would close a second sub-compartment 136. The intermediate wall 300 would thus pass downwards from the bottom of the top part 110 between the two parts of the bottom plate 120. The cuts 150 are not for clarity reasons shown in the figure, but the top wall 111 of the top part 110 of the cover 100 can be provided with any pattern of cuts 150 as shown e.g. in figures 4-6.

The top wall 110 and the side walls 112, 113, 114, 115 form a compartment 130 for the permanent magnets 35. The permanent magnets 35 are thus positioned within the compartment 130 so that the permanent magnets 35 become enclosed within the cover 100. The bottom plate 120 can be used to close the open bottom 140 of the compartment 130 formed by the top part 110, whereby the permanent magnets 35 become fully enclosed within the cover 100. The cuts 150 in the cover 100 open this otherwise enclosed compartment 130. The compartment 130 can, however, be closed again by coating the outer surface of the top part 110 of the cover 100 with an electrically and magnetically non-conductive layer 160. The outer surface of the top part 110 of the cover 100 is advantageously coated with an electrically and magnetically non-conductive layer 160 in all embodiments of the invention. Said layer 160 may also fill the cuts 150 so that the permanent magnet modules 35 become hermetically sealed within the cover 100. The layer 160 can be e.g. resin. The layer 160 protects the permanent magnet module 200 i.e. the cover 100 and the permanent magnets 35 from corrosion.

The top part 110 of the cover 100 can be made of a single sheet by bending and by joining the edges in the side walls in any suitable way so that a compartment is formed within the top part 110 of the cover 100. The bottom plate 120 with the flanges 121, 122 can also be made of a single sheet. The top part 110 of the cover 100 can on the other hand be made of several different sheets that are joined together at the edges in any suitable way so that a compartment with a top wall 111 and side walls 112. 113. 114, 115 is formed within the top part 110 of the cover 100. The general form of the cover 100 is rectangular in the figures, but the cover 100 could have any suitable form, e.g. circular or elliptical or polygonal or the cover 100 could form a hemisphere. The form of the cover 100 may be adapted to the form of the permanent magnets 35 positioned within the cover 100.

The top part 110 of the cover 100 comprises a top wall 111 and four side walls 112, 113, 114, 115 in the embodiment shown in the figures. This is an advantageous embodiment as the permanent magnets 35 become fully embedded within the cover 100. It would, however, also be possible that the top part 110 would comprise only two side walls 114, 115. The transverse directed Y-Y side surfaces of the top part 110 could e.g. be open and the permanent magnets 35 could be enclosed by the top wall 111, by two axially directed X-X side walls 114, 115 and by the outer surface 22A of the rotor 20 or by the bottom plate 120. There could be flanges 116, 117 extending outwardly from the lower edges of the side walls 114, 115 by means of which the cover 100 could be attached to the rotor 20. The permanent magnets 35 within the cover 100 could in such an embodiment be coated with an electrically and non-magnetic protective layer in order to protect the permanent magnets against corrosion if the environment in which the rotor 20 operates is corrosive.

The term compartment is thus to be understood in a broad sense in this application. The top part 110 forms a support structure against centrifugal forces for the at least one permanent magnet within the top part 110. The top part 110 forms thus at least an attachment clamp which forms a support for the at least one permanent magnet at least in the radial and in the circumferential direction.

The top wall 111 of the top part 110 of the cover 100 could in all embodiments of the invention be planar, curved or folded. A curved top wall 111 would have a curvature corresponding to the curvature of a circumference of a circle having the middle point on the rotor axis X-X and a radius passing along an outer perimeter of the top wall 111. A folded top wall 111 i.e. a top wall 111 where a perimeter running in the transverse direction Y-Y of the top wall 111 forms a polygonal would have a general curvature corresponding to the curvature of a circumference of a circle having the middle point on the rotor axis X-X and a radius passing along an outer perimeter of the top wall 111. The side walls 112, 113, 114, 115 of the top part 110 of the cover 100 may be perpendicular in relation to the top wall 111. The other possibility is that at least some of the side walls 112, 113, 114, 115 are inclined in relation to the top wall 111. The generally rectangular form of the cover as shown in the figures leads to four side walls 112, 113, 114, 115, but this need not be the case. A circular or elliptical form of the top part 110 of the cover 100 would lead to a situation where there is only one side wall and/or only one top wall in the top part 110 of the cover 100. The top part 110 of the cover 100 could also have the form of a hemisphere in which case there would be only a top wall or only a side wall forming the whole top part 110 of the cover 100. A polygonal form would lead to a situation where there are several side walls in the top part 110 of the cover 100.

The lower surface of the bottom plate 120 could be straight or curved. A straight lower surface of the bottom plate 120 may be used when the outer surface 22A of the rotor 20 is polygonal i.e. there are straight rotor portions under each row A1, A2 of permanent magnet modules 200. A curved edge may be used when the outer surface 22A of the rotor 20 is circular i.e. there are curved rotor portions under each row A1, A2 of permanent magnet modules 200. The general form of the bottom plate 120 may be adapted to the general form of the top part 110 of the cover 100.

The bottom plate 120 is not as such necessary in the invention. The cover 100 could be used without the bottom plate 120 in which case the bottom 140 of the compartment 130 within the cover would be open. This open bottom 140 would be closed when the cover 100 with the permanent magnets 35 would be positioned against the outer surface 22A of the rotor 20. The lower side edges of the side walls 112, 113, 114, 115 would then seat tightly against the outer surface 22A of the rotor 20. The permanent magnets 35 within the cover 100 may seat directly against the outer surface 22A of the rotor 20 or a separate support piece could be used between the permanent magnets 35 and the outer surface 22A of the rotor 20. The support piece would then fit into the top part 110 of the cover 100.

The use of the bottom plate 120 is, however, advantageous as it closes the open bottom 140 of the compartment 130 in the top part 110 of the cover 100. The top part 110 of the cover 100 provided with the protective layer 160 forms is such case together with the bottom plate 120 a closed compartment for the permanent magnets 35 so that the permanent magnets 35 become protected against the environment acting on the outer surface 22A of the rotor 20. The permanent magnets 35 are enclosed between the bottom plate 120 and the cup like top part 110 of the cover 100. The environment acting on the outer surface 22A of the rotor 20 could be corrosive, whereby the top part 110 and the bottom plate 120 protect the permanent magnets 35 against corrosion. The totally enclosed permanent magnet module 200 can be manufactured independently of the manufacture of the rotor 20 by a subcontractor and transported to the rotor 20 manufacturer. A totally enclosed permanent magnet module 200 protects the permanent magnets 35 within the permanent magnet module 200 during transportation. The bottom plate 120 also stiffens the whole construction of the permanent magnet module 200. It is also easy to achieve a curved surface with the bottom plate 120, but it may be more difficult to achieve a curved surface with the porous permanent magnets 35.

The top part 110 of the cover 100 has a length L1 in the axial direction X-X and a width W1 in the transverse direction Y-Y regardless of the form of the top part of the cover 100. The length L1 of the top part 110 of the cover 100 in the axial direction X-X is determined by the maximum dimension of the top part 110 of the cover 100 in the axial direction X-X. The width W1 of the cover 100 in the transverse direction Y-Y is determined by the maximum dimension of the top part 110 of the cover 100 in the transverse direction Y-Y.

The rows A1, A2 of permanent magnet modules 200 are axially directed X-X in the figures. The rows A1, A2 of permanent magnet modules 200 could, however, be directed in a small angle in relation to the axial direction X-X. It would also be possible that the permanent magnet modules 200 in the rows A1, A2 forming an angle with the axial direction X-X are staggered in relation to each other. Each permanent magnet module 200 would thus be directed in the axial direction X-X, but slightly staggered in relation to the adjacent permanent magnet modules 200. The rows could deviate 0 to 3 degrees from the axial direction X-X.

The permanent magnet modules in each row A1, A2 in the figures extend along a portion of the axial length L0 of the outer surface 22A of the rotor 20. The permanent magnet modules could, however, extend along the whole axial length L0 of the outer surface 22A of the rotor 20. The compartment 130 or the sub-compartments 135, 136 may in such case comprise several consecutive permanent magnets 35 along the axial length L0 of the outer surface 22A of the rotor 20.

The cuts 150 and/or the secondary rows T1-T5 are substantially transverse directed Y-Y. This means that there can be a small deviation from the exact transverse direction. A skilled person understands that the exact transverse direction is the preferred direction, but that the invention would also probably work in a situation where there is a small deviation from the exact transverse direction. The cuts 150 and/or the secondary rows T1-T5 could deviate 0 to 2 degrees from the exact axial direction X-X.

The top part 110 and the bottom plate 120 of the cover 100 can be made of metal, advantageously of stainless steel or of composite material, e.g. of carbon fibre or Kevlar. The thickness of the top part 110 of the cover 100 may be in the range of 1 to 2 mm. The width of the cuts 150 in the axial direction X-X is in the range of 0.2 to 0.5 mm. The cuts 150 can be done e.g. with a laser.

The cuts 150 may advantageously in all embodiments of the invention start at a small distance of about 1 to 3 mm from the respective side edges of the top wall 111. Such a solution will still eliminate eddy current losses effectively and the rigidity of the top part 110 of the cover 100 will still be on a reasonable level.

The axial X-X length L1 of the permanent magnet modules 200 is in the order of 100 to 150 mm. This is due to the fact that the magnetizing equipment cannot normally handle longer permanent magnet modules 200. There could be 6 to 10 permanent magnet modules in each primary row A1, A2.

The permanent magnets 35 in the permanent magnet module 200 are made of a powder like magnetic material that is compressed to form the permanent magnet 35. The permanent magnets 35 are as such fragile and the cover 100 forms thus a protection and a support structure for the permanent magnets 35. The cover 100 can easily be provided with suitable fastening means through which the whole package forming the permanent magnet module 200 can then be attached to the outer surface 22A of the rotor 20.

The cooling of the electric machine 90 shown in the figures is an asymmetric cooling. The cooling air L1 circuit passes radially from the fan 86 into the second compartment 72, axially X-X through the electric power generator to the first compartment 71, radially out to the outer compartment 81 and through the heat exchanger 85 back to the fan 86.

The invention can advantageously be applied in an electric machine comprising the rotor and having a power of at least 5 MW, advantageously at least 10 MW. The shaft height of the electric machine comprising the rotor is advantageously at least 1.0 m. The rotation speed of the electric machine comprising the rotor may be in the range of 150 to 700 rpm. Radial cooling through radial air ducts in the rotor or stator are not normally used due to the slow rotation speed of the electric machine 90. An external fan 86 is thus used in order to circulate cooling air in the electric machine 90 comprising the rotor.

The electric machine 90 comprising the rotor is advantageously connected to the electric grid through a frequency converter.

The stator 30 of the electric machine 90 comprising the rotor could advantageously be cooled e.g. by a water cooling circuit adapted to the stator 30.

The electric machine 90 comprising the rotor may be an electric motor or an electric generator. The electric machine 90 is advantageously a generator in a wind power plant, said generator being connected to the electric grid by means of a frequency converter. The rotation speed of the generator will thus be varying depending on the wind speed, which means that the generator must be connected to the electric grid by means of a frequency converter in order to be able to maintain the frequency of electric power that is supplied to the grid at a constant level.

The invention is not limited to the electric machine 90 disclosed in the figures. The invention can be applied in any permanent magnet electric machine. The construction of the rotor 20 could deviate from that disclosed in the figures. The essential thing is that the rotor 20 has an outer surface 22A provided with at least one permanent magnet module. The outer surface 22A of the rotor 20 could be circular or polygonal or provided with circular portions or straight portions separated by cavities extending inwardly into the rotor 20.

The invention is not limited to the examples described above but may vary within the scope of the claims.

## Claims

1. A rotor (20) for an electric machine,
the rotor (20) having an axial direction (X-X) and a transverse direction (Y-Y) being perpendicular to the axial direction (X-X),
the rotor (20) comprising an outer surface (22A) with an axial length (L0), the outer surface (22A) of the rotor (20) being provided with a plurality of primary rows (A1, A2) of surface mounted permanent magnet modules (200) distributed along a perimeter of the outer surface (22A) of the rotor (20), each primary row (A1, A2) comprising at least one permanent magnet module (200),
the permanent magnet module (200) comprising a cover (100) having a top part (110) forming at least one compartment (130, 135, 136) for housing at least one permanent magnet (35),
**characterized in that**:
the top part (110) of the cover (100) is provided with at least one cut (150) extending in a transverse direction in relation to a direction of the row (A1, A2) along at least a portion of a width (W1) in the transverse direction of the top part (110) of the cover (100) and cutting through the whole thickness of the top part (110) of the cover (100).

2. The rotor according to claim 1, **characterized in that** the cover (100) further comprises a bottom plate (120) closing a bottom (140) of the at least one compartment (130, 135, 136) of the top part (110), the bottom plate (120) being positioned against the outer surface (22A) of the rotor (20).

3. The rotor according to claim 1 or 2, **characterized in that** the top part of the cover (100) comprises a top wall (111) and at least two side walls (114, 115), an upper edge of each of the side walls (114, 115) coinciding with corresponding side edges of the top wall (111) and a lower edge of each of the side walls (114, 115) seating against the outer surface (22A) of the rotor (20) or the bottom plate (120), whereby the at least one compartment (130, 135, 136) for the permanent magnets (35) is restricted by the top wall (111), the side walls (114, 115) and the outer surface (22A) of the rotor or the bottom plate (120) of the cover (100).

4. The rotor according to claim 3, **characterized in that** the top part of the cover (100) comprises a top wall (111) and four side walls (112, 113, 114,115).

5. The rotor according to claim 3 or 4, **characterized in that** the top wall (111) is curved having a curvature corresponding to the curvature of a circumference of a circle having the middle point on the rotor axis (X-X) and a radius passing along an outer perimeter of the top wall (111).

6. The rotor according to claim 3 or 4, **characterized in that** a perimeter of the top wall (111) forms in the transverse direction a polygonal line having a general curvature corresponding to the curvature of a circumference of a circle having the middle point on the rotor axis (X-X) and a radius passing along the outer perimeter of the top wall (111).

7. The rotor according to any one of claims 1 to 6, **characterized in that** the cover (100) further comprises fastening flanges (116, 117, 121, 121) by means of which the cover (100) is attached to the rotor (20).

8. The rotor according to any one of claims 1 to 7, **characterized in that** the top part (110) of the cover (100) is provided with a pattern of cuts (150), the cuts (150) being arranged in substantially transverse directed secondary rows (T1-T5) positioned at an axial (X-X) distance (X1) from each other, whereby each secondary row (T1-T5) comprises at least one cut (150).

9. The rotor according to claim 8, **characterized in that** each secondary row (T1-T5) comprises only one cut (150), whereby the single cut (150) extends along the whole width (W1) of the top part (110) of the cover (100).

10. The rotor according to claim 8, **characterized in that** each secondary row (T1-T5) comprises at least two consecutive cuts (150), the cuts (150) in two adjacent secondary rows (T1-T5) being staggered so that there is a cut (150) in at least one of the two adjacent secondary rows (T1-T5) that extends in the transverse direction over the solid neck portion of the top part (110) of the cover (100) that is left between two consecutive cuts (150) in the other of the two adjacent secondary rows (T1-T5), whereby there is no overlap between cuts (150) in two adjacent secondary rows (T1-T5).

11. The rotor according to claim 8, **characterized in that** each secondary row (T1-T5) comprises at least two consecutive cuts (150), the cuts (150) in two adjacent secondary rows (T1-T5) being staggered so that each cut (150) in at least one of the two adjacent secondary rows (T1-T5) extends in the transverse direction a distance over the solid neck portion of the top part (110) of the cover (100) that is left between two consecutive cuts (150) in the other of the two adjacent secondary rows (T1-T5), whereby there is a partial overlap between cuts (150) in two adjacent secondary rows (T1-T5).

12. The rotor according to any one of claims 1 to 11, **characterized in that** an outer surface of the top part (110) of the cover (100) is coated with an electrically and magnetically non-conductive protective layer (160), said protective layer (160) also filling the cuts (150) so that the permanent magnets (35) become hermetically sealed within the cover (100).

13. The rotor according to claim 12, **characterized in that** the electrically and magnetically non-conductive protective layer (160) is a resin layer.

14. The rotor according to any one of claims 1 to 13, **characterized in that** the cover (100) is made of metal, advantageously of stainless steel.

15. The rotor according to any one of claims 1 to 14, **characterized in that** the primary rows (A1, A2) extend in the axial direction (X-X).
